# EUROPÄISCHE PATENTSCHRIFT

(11) **EP 3 138 648 B1**
(45) Veröffentlichungstag und Bekanntmachung des Hinweises auf die Patenterteilung: **02.12.2020**
(21) Anmeldenummer: 16185414.6
(22) Anmeldetag: 24.08.2016
(51) Int. Cl.: B23H 3/10, B23H 9/10, B23H 3/04

(54) **VERFAHREN ZUR HERSTELLUNG EINES SCHAUFELBLATTES**
DEVICE FOR PRODUCING A BLADE
PROCEDE DE FABRICATION D'UNE PALE

(30) Priorität: 03.09.2015 DE 102015216844
(43) Veröffentlichungstag der Anmeldung: 08.03.2017
(73) Patentinhaber: MTU Aero Engines AG, 80995 München (DE)
(72) Erfinder: Huttner, Roland, 82287 Jesenwang (DE); Breitsameter, Xaver, 86576 Schiltberg (DE)

(56) Entgegenhaltungen:
- CN-A- 103 521 861
- DE-A1-102009 032 563
- US-A- 4 851 090
- US-A1- 2009 211 921

## Beschreibung

Die Erfindung betrifft ein Verfahren zur Herstellung eines Schaufelblattes nach dem Oberbegriff des Anspruchs 1. Ein solches Verfahren ist aus der DE 10 2009 032563 A1 bekannt.

Bei der Herstellung von Leitschaufeln, wie sie in Leitkränzen von Gasturbinen eingesetzt werden, und Laufschaufeln, wie sie in BLISKs (bladed integrated disk) bzw. BLINGs (bladed ring) in stationären oder instationären Gasturbinen eingesetzt werden, geht es insbesondere um die Kosten, um die Herstellgeschwindigkeit und um die Einhaltung der vorgegebenen Toleranzen, ohne dabei zu viel Ausschuss zu produzieren. Dabei können die Schaufel bzw. Schaufelblätter durch mechanisches Abtragen, wie das Fräsen, oder durch elektrochemisches Abtragen hergestellt werden.

Insbesondere haben bei bestimmten Werkstoffmaterialien, wie beispielsweise Nickel-Basis-Legierungen, elektrochemische Abtragverfahren (auf Englisch: ecm = electro chemical machining) Vorteile gegenüber dem mechanischen Abtragen.

Es ist bekannt Teilbereiche der Schaufel mit dem ECM-Verfahren zu bearbeiten. So werden alle Flächen des Schaufelblattes auf Endkontur gefräst, nur die Kanten werden durch das ECM-Verfahren auf ihre Endkontur gebracht. Dies hat den Nachteil, dass das Geschwindigkeitspotential des ECM-Verfahrens nicht voll ausgeschöpft wird.

Es ist auch bekannt, dass die Ein- und/oder Austrittskanten von Gussschaufeln mittels ECM fertig bearbeitet werden können.

In der Druckschrift US 4,851,090 wird ein ECM-Verfahren vorgestellt. Dabei wird das Schaufelblatt zwischen zwei Elektroden angeordnet. Der Elektrolyt wird von der Hinterkante des Schaufelblatts über die Vorderkante des Schaufelblatts geleitet. Dies hat allerdings den Nachteil, dass die Basis und die Spitze des Schaufelblatts damit nicht bearbeitet werden können. Lediglich die Saug- und Druckseite der Schaufelblätter lassen sich damit bearbeiten.

Somit liegt der vorliegenden Erfindung die Aufgabe zu Grunde, eine Vorrichtung und ein Verfahren zur Herstellung eines Schaufelblatts vorzustellen, das die obigen Nachteile überwindet und somit die Bearbeitung der Basis und der Spitze des Schaufelblatts ermöglicht.

Die Aufgabe wird durch die Merkmale des Anspruchs 1 gelöst.

Die Erfindung betrifft ein Verfahren zur Herstellung eines Schaufelblattes aus einem Werkstück mit mindestens zwei Lücken und mindestens einem zwischen den beiden Lücken angeordneten Rohteil des Werkstücks. Das Rohteil weist zwei sich gegenüberliegende Seitenflächen auf, die durch eine Basis, durch eine Spitze und durch eine erste und zweite Kante begrenzt werden. In dem erfindungsgemäßen Verfahrensschritt a) wird eine erste Elektrode in die erste Lücke und eine zweite Elektrode in die zweite Lücke angeordnet. In Schritt b) wird eine positive Spannung an das Rohteil und eine negative Spannung an die erste Elektrode und an die zweite Elektrode angelegt. In Schritt c) wird die erste Elektrode in Richtung der ersten Seitenfläche bewegt. Alternativ oder in Kombination dazu wird in Schritt c) die zweite Elektrode in Richtung der zweiten Seitenfläche bewegt. Erfindungsgemäß erfolgt vor Schritt b) ein Schritt d), bei dem zwischen den beiden Elektroden über die Spitze zur Basis hin Elektrolyt geleitet wird bzw. Elektrolyt fließt.

Unter einer Basis ist der Bereich des Schaufelblatts zu verstehen, der in den Rest des Werkstücks übergeht bzw. mit einem Ring, einer Scheibe bzw. einem Kranz verbunden ist. Dabei ist die Spitze des Schaufelblatts zur Basis gegenüberliegend angeordnet und bildet ein freies Ende. Die Schaufelblätter verlaufen dabei im Wesentlichen radial zur Kreisbahn des Bauteils (wie Ring, Scheibe bzw. Kranz). Die Vorschubrichtung der Elektroden können parallel zueinander verlaufen. Dieses erfindungsgemäße Verfahren hat dabei den Vorteil, dass nicht nur die Seitenflächen des Schaufelblattes, sondern auch die Spitze und die Basis des Schaufelblatts zeitgleich bearbeitet werden können.

Um die Elektroden in die Lücken platzieren zu können, sollte das Werkstück vorbereitet werden. Daher werden vorzugsweise die beiden Lücken durch mechanisches, insbesondere durch Fräsen, und/oder durch elektrochemisches Abtragen hergestellt. Typischerweise werden alle Lücken aus dem Werkstück herausgearbeitet. Dieser Verfahrensschritt wird auch als Vorbearbeitungs- und/oder Schruppprozess bezeichnet. Besitzt eine Blisk beispielsweise 38 Schaufelblätter, so sind ebenso viele Lücken notwendig.

Gemäß der Erfindung wird mit den Schritten a) bis d) aus dem Rohteil eine Zwischenschaufel erzeugt, die im Wesentlichen ein gleichmäßiges Aufmaß an mindestens einem Bereich des Schaufelblattes gegenüber einer Nominalkontur des Schaufelblattes aufweist. Zwischen der zu bearbeitenden Oberfläche des Rohteils und der Elektrodenoberfläche ist eine Spalt vorhanden, der als Senkspalt bezeichnet wird. Dabei ist der Senkspalt vom Raumwinkel abhängig, der zwischen der Zustellrichtung und der Flächennormalen der Elektrode begrenzt wird. Beträgt der Raumwinkel weniger als 30°, so spricht man von einem Stirnspalt. Ab einem Raumwinkel von 50° spricht man von einem Seitenspalt. In einem Seitenspalt kann unerwünscht und unkontrolliert zu viel Material abgetragen werden.

Gemäß der Erfindung stellt der Bereich die erste und/oder die zweite Kante des Schaufelblattes dar. Dies hat den Vorteil, dass die Kanten sehr präzise hergestellt werden können. Dabei können die Elektroden auf die Kanten zubewegt werden, um unerwünschte Seitenspalte zu vermeiden. Dies wird auch als Kantenbearbeitung bezeichnet.

Gemäß der Erfindung wird mit den Schritten a) bis d) aus dem Zwischenteil die Nominalkontur des Schaufelblattes erzeugt. Als Zwischenteil wird die Zwischenschaufel verwendet. Dies hat den Vorteil, dass der Ringraum, d.h. die Oberfläche des Werkstücks in den Lücken zwischen den Schaufelblättern, gleich mitbearbeitet wird. Dies wird auch als Fertigbearbeitung bezeichnet.

In einer weiteren vorteilhaften Ausgestaltung der Erfindung folgt während der Fertigbearbeitung nach Schritt c) ein Schritt e), bei dem die erste Elektrode von der ersten Seitenfläche und/oder die zweite Elektrode von der zweiten Seitenfläche wegbewegt wird. Dabei werden die Schritte vorzugsweise c) und e) bis zu ungefähr 30 mal und insbesondere bis zu 50 mal in der Sekunde wiederholt. Dies wird auch als PECM (precise electro chemical machining) bezeichnet. Dies hat den Vorteil, dass durch das Wegbewegen der Elektrode verbrauchtes und mit gelöstem Werkstoffmaterial "gesättigtes" Elektrolyt schneller aus dem Bearbeitungsspalt gespült wird. Während der Hinbewegung der Elektrode wird frisches Elektrolyt in den Spalt gefördert. Die Bestromung findet am höchsten Punkt der Zustellung statt. Damit lassen sich Kurzschlüsse vermeiden, der Spalt zwischen der Elektrode und dem Werkstück kann kleiner ausfallen, so dass damit die Genauigkeit erhöht wird.

Nachfolgend wird eine Vorrichtung zur Herstellung eines Schaufelblattes mit einer Profildicke und einer Profillänge aus einem Werkstück beschrieben. Die Vorrichtung umfasst eine erste Elektrode, eine zweite Elektrode und eine Spannungsquelle, dessen negativer Pol an den beiden Elektroden angeschlossen ist. Mindestens eine der beiden Elektroden weist eine Aufnahme für ein Rohteil auf, wobei die Aufnahme durch eine vordere Aufnahmekante und eine hintere Aufnahmekante begrenzt ist. Dabei weist mindestens eine Elektrode am oberen Ende eine Einfüllfläche auf, die in die Aufnahme mündet und sich mindestens von der vorderen Aufnahmekante bis zur hinteren Aufnahme erstreckt. Dies hat den Vorteil, dass nicht nur die Flächen, sondern auch die Spitze und die Basis des Schaufelblatt von der Vorrichtung bearbeitet werden können. Das obere Ende der Elektrode wird bei der Bearbeitung an das freie Ende des Rohteils bzw. des Schaufelblattes angeordnet, so dass der Elektrolyt von der Spritze über die Seitenfläche bis zur Basis des Schaufelblattes fliesen kann.

In einer vorteilhaften Ausgestaltung ist die erste Elektrode durch ein erstes Element und/oder die zweite Elektrode durch ein zweites Element geführt, das jeweils seitlich zu der Führungsrichtung der entsprechenden Elektrode angeordnet ist. Dies hat den Vorteil, dass die Elektroden auf genau vorbestimmte Richtungen bewegt werden können. In Kombination oder alternativ dazu verhindern die Elemente ein seitliches Abfließen des Elektrolyts.

In einer weiteren vorteilhaften Ausgestaltung bildet mindestens eine Elektrode mindestens einen zur Aufnahmekante parallel verlaufenden Spülkanal, der außerhalb der Aufnahme angeordnet ist. Dies hat den Vorteil, dass das verbrauchte Elektrolyt außerhalb der Bearbeitungsfläche wegtransportiert werden kann. Insbesondere wird an der Schaufelspitze Material gelöst. Dieses gelöste Material müsste dann über die gesamte Seitenfläche fliesen. Je näher zur Basis, umso mehr gelöstes Material sammelt sich und das Risiko eines Kurzschlusses würde sich erhöhen. Ein Kurzschluss ist zu vermeiden, da dann das Werkstück als Ausschuss zu behandeln ist.

In einer weiteren vorteilhaften Ausgestaltung weist die Vorrichtung mindestens einen Isolator auf, der von der Aufnahme abgewandten Seite der Elektrode angeordnet ist und/oder von der einen Elektrode zum Element der anderen Elektrode verläuft. Sollen mehrere Schaufelblätter hergestellt werden, so werden diese nacheinander bearbeitet. Damit die Rohteile oder die Zwischenschaufeln oder die Endschaufeln, die der zu bearbeitenden Schaufel benachbart sind, nicht unerwünscht bearbeitet werden, muss vermieden werden, dass sich ein elektrisches Potential zwischen den nicht zu bearbeitende Teilen und den Elektroden aufbaut. Damit wird insbesondere vermieden, dass an den benachbarten Schaufeln Material abgetragen wird.

In einer weiteren vorteilhaften Ausgestaltung ist ein unteres Ende der Elektrode derart geformt, dass die Nominalkontur des Ringraums herstellbar ist. Dies hat den Vorteil, dass sowohl die Oberfläche des Schaufelblatts als auch die Oberfläche des Werkstück gleichzeitig bearbeitet werden können. Insbesondere sind aus aerodynamischen Gründen die Oberfläche des Werkstücks zwischen den Schaufelblättern nicht mehr zylindrisch oder kegelförmig. Stattdessen weist die Zwischenoberfläche des Werkstücks Hügel und Täler auf, auch als konturierter Ringraum bezeichnet. Als unteres Ende ist damit das Ende der Elektrode gemeint, die bei der Bearbeitung in der Nähe der Basis angeordnet wird.

Weitere vorteilhafte Ausgestaltungen der Erfindung sind in den Unteransprüchen wiedergegeben.

Nachfolgend werden anhand der schematischen Zeichnung bevorzugte Ausführungsbeispiele der Erfindung näher beschrieben. Dabei zeigen:
- Figur 1:: eine perspektivische Ansicht eines Werkstücks,
- Figur 2:: eine Draufsicht auf erfindungsgemäße Zwischenbearbeitung,
- Figur 3:: eine Draufsicht auf die erfindungsgemäße Kantenbearbeitung,
- Figur 4:: eine Draufsicht auf die erfindungsgemäße Fertigbearbeitung, und
- Figur 5:: einen Schnitt entlang der Linie V-V in Figur 4.

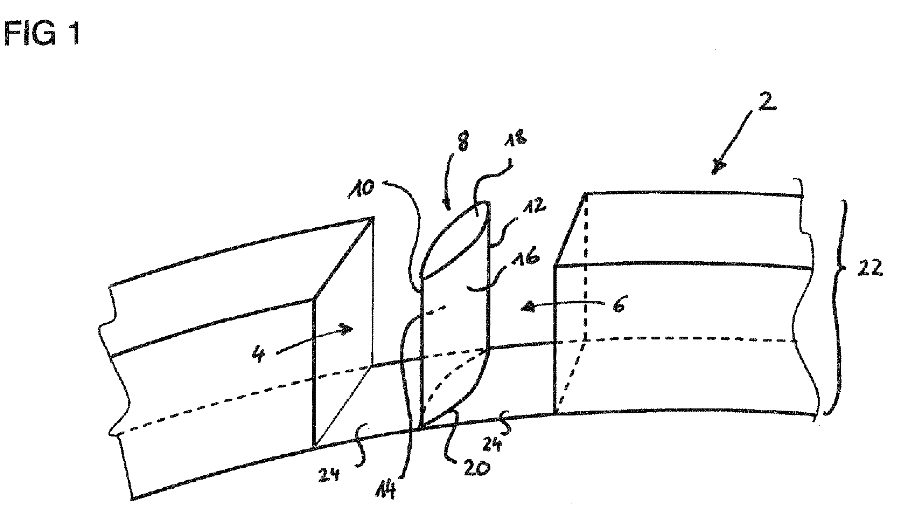

Die Figur 1 zeigt eine perspektive Ansicht eines Werkstücks 2. Dies kann beispielsweise eine Scheibe, ein Ring oder ein Kranz sein. Auch Teilstücke sind möglich also auch Segmente der vorher beschriebenen Teile. In das Material des Werkstücks 2 sind eine erste Lücke 4 und eine zweite Lücke 6 durch mechanisches bzw. elektrochemisches Abtragen herausgearbeitet worden. Zwischen beiden ist ein Rohteil 8 angeordnet. Das Rohteil 8 weist eine erste Kante 10 (beispielsweise Vorderkante bzw. Eintrittskante), eine zweite Kante 12 (beispielsweise Hinterkante bzw. Austrittskante), eine erste Seitenfläche 14 (beispielsweise eine Druckseite), die von der ersten 10 bis zur zweiten 12 Kante verläuft und eine zweite Seitenfläche 16 (beispielsweise eine Saugseite), die ebenfalls von der ersten 10 bis zur zweiten 12 Kante verläuft. Das freie Ende des Rohteils 2 wird als Spitze bzw. als Tip 18 bezeichnet. Hier weist die Spitze 18 radial nach außen. Für einen Leitkranz würde diese Spitze radial nach innen zeigen. Das Rohteil weist in Richtung des zur Spitze 18 gegenüberliegenden Bereichs eine Basis 20 auf, die nahtlos in das Werkstück 2 übergeht. Die Oberfläche des Werkstücks 2 an den Lücken 4 und 6 wird als die Ringraumoberfläche 24 bezeichnet. In dem hier äußeren radialen Randbereich 22 des Werkstücks 2 können weitere Rohteile 8 herausgearbeitet werden.

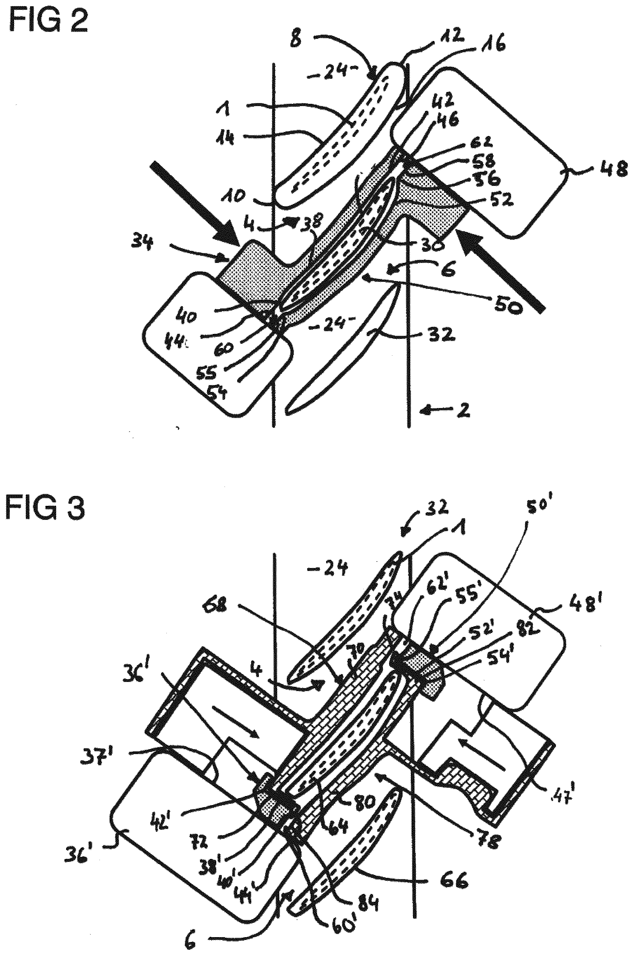

In den Figuren 2 bis 4 sind hier insgesamt drei Schaufeln hergestellt worden. Naturgemäß können es auch mehr sein, wie z.B. 39 Schaufeln.

Die Figur 2 zeigt eine Draufsicht auf die erfindungsgemäße Zwischenbearbeitung. Zur besseren Darstellung wurde die Umfangsfläche des Werkstücks 2 samt den Rohteilen 8 abgewickelt; von oben nach unten verläuft das Werkstück 2. Auf der Oberfläche des Werkstücks 2 sind ein Rohteil 8, eine in Bearbeitung befindliche Zwischenschaufel 30 und eine fertigbearbeitete Zwischenschaufel 32 abgebildet. Im Rohteil 8 ist gestrichelt die Nominalkontur 1 des Schaufelblatts eingezeichnet. In der ersten Lücke 4 zwischen dem Rohteil 8 und der in Bearbeitung befindlichen Zwischenschaufel 30 ist eine erste Elektrode 34 nach der ersten Ausführungsform angeordnet. Diese erste Elektrode 34 weist eine erste Aufnahme 38 auf, die von der ersten vorderen Aufnahmekante 40 bis zur ersten hinteren Aufnahmekante 42 verläuft. Die erste Aufnahme 38 stellt somit eine entsprechende Konturierung der ersten Elektrodenoberfläche dar, in der eine Zwischenschaufel 30 bearbeitet wird. Im Anschluss an der ersten vorderen Aufnahmekante 40 erstreckt sich eine erste vordere Spülfläche 44 der ersten Elektrode 34 bis zu einem ersten Element 36. Dieses Element kann ein Führungselement oder eine Spülkammer sein. Im Anschluss an die erste hintere Aufnahmekante 42 erstreckt sich eine erste hintere Spülfläche 46 der ersten Elektrode 34 bis zu einem zweiten Element 48. Dieses Element kann ein Führungselement oder eine Spülkammer sein.

In der zweiten Lücke 6 zwischen der fertig bearbeitete Zwischenschaufel 32 und der in Bearbeitung befindlichen Zwischenschaufel 30 ist eine zweite Elektrode 50 angeordnet. Diese zweite Elektrode 50 weist eine zweite Aufnahme 52 auf, die von der zweiten vorderen Aufnahmekante 54 bis zu einer zweiten hinteren Aufnahmekante 56 verläuft. Die zweite Aufnahme 52 stellt somit eine entsprechende Konturierung der zweiten Elektrodenoberfläche dar, in der eine Zwischenschaufel 30 bearbeitet wird. Im Anschluss an die zweite vordere Aufnahmekante 54 erstreckt sich eine zweite vordere Spülfläche 55 der zweiten Elektrode 50 bis zu einem ersten Element 36. Im Anschluss an die zweite hintere Aufnahmekante 56 erstreckt sich eine zweite hintere Spülfläche 58 der zweiten Elektrode 50 bis zu einem zweiten Element 48. In der ersten Aufnahme 38 und in der zweiten Aufnahme 52 ist die in Bearbeitung befindliche Zwischenschaufel 30 angeordnet. Die erste Aufnahme 38 bzw. dessen Fläche ist von der ersten Seitenfläche 14 der Zwischenschaufel 30 beabstandet, also mit einem Abstand dazwischen angeordnet. Ebenso ist die zweite Aufnahme 52 bzw. dessen Fläche von der zweiten Seitenfläche 16 beanstandet, damit Elektrolyt von der Spitze 18 zur Basis 20 fliesen kann. Die beiden Elektroden 34 und 50 werden entlang der beiden Pfeile aufeinander zu bewegt und können dabei von den beiden Elementen 36 und 48 seitlich geführt werden. Dabei bilden das erste Element 36, die erste vordere Spülfläche 44 und die zweite vordere Spülfläche 55 einen vorderen Spülkanal 60 aus. Außerdem bilden auch das zweite Element 48, die erste hintere Spülfläche 46 und die zweite hintere Spülfläche 58 einen hinteren Spülkanal 62 aus.

Beide Elektroden 34 und 50 erstrecken sich vom ersten Element 36 bis zum zweiten Element 48.

Wie zu erkennen ist, weist die erste Kante 10 in den vorderen Spülkanal 60. Und die zweite Kante 12 weist in den hinteren Spülkanal 62. Bei dieser Zwischenbearbeitung werden daher vorzugsweise die Seitenflächen 14 und 16 bearbeitet. Die Elektroden 34 und 50 befinden sich in Figur 2 in der Endposition, d.h. dass die Elektroden 34 und 50 nicht näher zusammengeschoben werden. Der Elektrolyt fließt in die Blattebene hinein. Dabei kann verbrauchtes Elektrolyt auch in die vorderen und hinteren Spülkanäle 60 und 62 entlang fließen.

Die Figur 3 zeigt eine Draufsicht auf die erfindungsgemäße Kantenbearbeitung. Hiermit sollen vorzugsweise die Kanten 10 und 12 bearbeitet werden. Zur besseren Darstellung wurde die Umfangsfläche des Werkstücks 2 samt den Zwischenschaufeln 32 abgewickelt. Von oben nach unten verläuft das Werkstück 2. Auf der Oberfläche des Werkstücks 2 sind eine Zwischenschaufel 32, eine in Bearbeitung befindliche Kantenschaufel 64 und eine fertigbearbeitete Kantenschaufel 66 abgebildet. In den Schaufeln 32, 64 und 66 ist gestrichelt die Nominalkontur 1 des Schaufelblatts eingezeichnet.

In der ersten Lücke 4 zwischen der Zwischenschaufel 32 und der in Bearbeitung befindlichen Kantenschaufel 64 ist eine erste Elektrode 34' nach der zweiten Ausführungsform angeordnet. Diese erste Elektrode 34' weist eine erste Aufnahme 38' auf, die von der ersten vorderen Aufnahmekante 40' bis zur ersten hinteren Aufnahmekante 42' verläuft. Im Anschluss an die erste vordere Aufnahmekante 40' erstreckt sich eine erste vordere Spülfläche 44' der ersten Elektrode 34' bis zu einem ersten Element 36'. Dabei verläuft die erste vordere Spülfläche 44' im Wesentlichen senkrecht zur Fläche der ersten Aufnahme 38'. Diese erste Elektrode 34' ist gegenüber der Vorderkante 10 angeordnet. Die Fläche der ersten Aufnahme 38' verläuft im Wesentlichen parallel zur Führungsfläche 37' des ersten Elementes 36'.

In der zweiten Lücke 6 zwischen der Kantenschaufel 66 und der in Bearbeitung befindlichen Kantenschaufel 64 ist eine zweite Elektrode 50' nach der zweiten Ausführungsform angeordnet. Diese zweite Elektrode 50' weist eine zweite Aufnahme 52' auf, die von der zweiten vorderen Aufnahmekante 54' bis zur zweiten hinteren Aufnahmekante 56' verläuft. Im Anschluss an die zweite hintere Aufnahmekante 56' erstreckt sich eine zweite vordere Spülfläche 55' der zweiten Elektrode 50' bis zu einem zweiten Element 48'. Dabei verläuft die zweite vordere Spülfläche 55' im Wesentlichen senkrecht zur Fläche der zweiten Aufnahme 52'. Diese zweite Elektrode 50' ist gegenüber der Hinterkante 12 angeordnet. Die Fläche der zweiten Aufnahme 52' verläuft im Wesentlichen parallel zur Führungsfläche 47' des zweiten Elementes 48'.

In der ersten Aufnahme 38' ist ein erster Isolator 68 angeordnet, der sich bis zu einem zweiten Element 48' erstreckt. Der Isolator 68 weist im Wesentlichen drei Bereiche auf. Der mittlere Bereich 70 verläuft im Wesentlichen parallel zur ersten Seitenfläche 14. Der Haltebereich 72 verläuft im Wesentlichen senkrecht zum mittleren Bereich 70 und wird in der ersten Aufnahme 38' befestigt. Der dritte Bereich ist ein Spülbereich 74, der in der Nähe des zweiten Elements 48' und gegenüber der zweiten vorderen Spülfläche 55' angeordnet ist. Dabei bilden der Spülbereich 74, die zweite vordere Spülfläche 55' und die Führungsfläche 47' einen zweiten Spülkanal 62'.

In der zweiten Aufnahme 52' ist ein zweiten Isolator 78 angeordnet, der sich bis zu einem zweiten Element 36' erstreckt. Der Isolator 78 weist im Wesentlichen 3 Bereiche auf. Der mittlere Bereich 80 verläuft im Wesentlichen parallel zur zweiten Seitenfläche 16. Der Haltebereich 82 verläuft im Wesentlichen senkrecht zum mittleren Bereich 80 und wird in der ersten Aufnahme 52' befestigt. Der dritte Bereich ist ein Spülbereich 84, der in der Nähe des ersten Element 36' und gegenüber der ersten vorderen Spülfläche 44' angeordnet ist. Dabei bilden der Spülbereich 84, die erste vordere Spülfläche 44' und die Führungsfläche 37' einen ersten Spülkanal 60'.

Bei dieser Kantenbearbeitung werden vorzugsweise die Kanten 10 und 12 bearbeitet. Die Elektroden 34' und 50' befinden sich in Figur 3 in der Endposition, d.h. dass die Elektroden 34' und 50' nicht näher zusammengeschoben werden. Der Elektrolyt fließt in die Blattebene hinein. Dabei kann verbrauchter Elektrolyt seitlich in die vorderen und hinteren Spülkanäle 60' und 62' fließen.

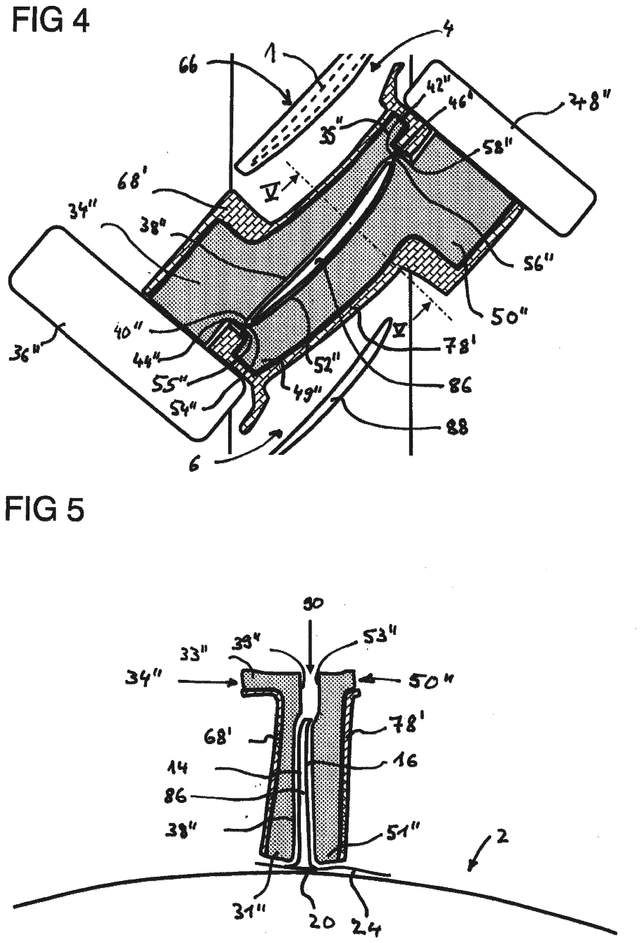

Die Figur 4 zeigt eine Draufsicht auf die erfindungsgemäße Fertigbearbeitung, auch als Finishbearbeitung bezeichnet. Die Figur 5 zeigt einen Schnitt entlang der Linie V-V in Figur 4, die durch die beiden Elektroden, den beiden Isolatoren und der zu bearbeitenden Endschaufel verläuft. Zur besseren Darstellung wurde die Umfangsfläche des Werkstücks 2 samt den darauf befindlichen Schaufeln abgewickelt. Von oben nach unten verläuft das Werkstück. Auf der Oberfläche des Werkstücks 2 sind hier in Figur 4 eine fertigbearbeitete Kantenschaufel 66, eine in Bearbeitung befindliche Endschaufel 86 und eine fertige Endschaufel 88 abgebildet. In der Kantenschaufel 66 ist gestrichelt die Nominalkontur 1 des Schaufelblatts eingezeichnet. Dabei ist anzumerken, dass die fertige Endschaufel 88 die Nominalkontur 1 aufweist.

In der ersten Lücke 4 zwischen der Kantenschaufel 66 und der in Bearbeitung befindlichen Endschaufel 86 ist eine erste Elektrode 34" nach der dritten Ausführungsform mit einem ersten Isolator 68' nach der zweiten Ausführungsform angeordnet. Diese erste Elektrode 34" weist eine erste Aufnahme 38" auf, die von der ersten vorderen Aufnahmekante 40" bis zur ersten hinteren Aufnahmekante 42" verläuft. Die erste Aufnahme 38" kann in drei Bereiche eingeteilt sein. Der erste Bereich deckt hier den ersten Eintrittskantenbereich ab. Der zweite Bereich deckt hier den Druckseitenbereich der Schaufel ab. Der dritte Bereich deckt hier den erste Austrittskantenbereich ab. Im Anschluss an der ersten vorderen Aufnahmekante 40" ist in Richtung des ersten Elementes 36" eine erste vordere Kontaktfläche 44" angeformt. Dazu versetzt erstreckt sich die erste Elektrode 34" bis zum ersten Element 36". Im Anschluss an der ersten hinteren Aufnahmekante 42" ist in Richtung eines zweiten Elementes 48" eine erste hintere Kontaktfläche 46" der ersten Elektrode 34" angeformt. An der von auf ersten Aufnahme 38" abgewandten Seite der ersten Elektrode 34" ist ein erster Isolator 68' angeordnet. Dieser erste Isolator 68' erstreckt sich von dem ersten Element 36" bis zum zweiten Element 48", wobei der erste Isolator 68' das hintere Ende 35" der ersten Elektrode 34" umklammert. Damit hat die erste Elektrode 34" keinen direkten Kontakt zum zweiten Element 48".

In der zweiten Lücke 6 zwischen der fertigen Endschaufel 88 und der in Bearbeitung befindlichen Endschaufel 86 ist eine zweite Elektrode 50" nach der dritten Ausführungsform mit einem zweiten Isolator 78' nach der zweiten Ausführungsform angeordnet. Diese zweite Elektrode 50" weist eine zweiten Aufnahme 52" auf, die von der zweiten vorderen Aufnahmekante 54" bis zur zweiten hinteren Aufnahmekante 56" verläuft. Die zweite Aufnahme 52" kann ebenfalls in drei Bereiche eingeteilt werden. Der erste Bereich deckt hier den zweiten Eintrittskantenbereich ab. Der zweite Bereich deckt hier den Saugseitenbereich der Schaufel ab. Der dritte Bereich deckt hier den zweiten Austrittskantenbereich ab. Im Anschluss an die zweite vordere Aufnahmekante 54" ist in Richtung des ersten Elementes 36" eine zweite vordere Kontaktfläche 55" angeformt. Im Anschluss an die zweite hintere Aufnahmekante 56" ist in Richtung eines zweiten Elementes 48" eine zweite hintere Kontaktfläche 58" der zweiten Elektrode 50" angeformt. Dazu versetzt erstreckt sich die zweite Elektrode 50" bis zum zweiten Element 48".

An der von der zweiten Aufnahme 52" abgewandten Seite der zweiten Elektrode 50" ist ein zweiter Isolator 78' angeordnet. Dieser zweite Isolator 68' erstreckt sich von dem ersten Element 36" bis zum zweiten Element 48", wobei der zweite Isolator 68' das vordere Ende 49" der zweiten Elektrode 50" umklammert. Damit hat die zweite Elektrode 50" keinen direkten Kontakt zum ersten Element 36". Ferner sind die beiden ersten Bereiche der zwei Aufnahmen 38" und 52" derart geformt, dass die Eintrittskante 12 nach der Fertigbearbeitung die endgültige Sollkontur aufweist. Ferner sind die beiden dritten Bereiche der zwei Aufnahmen 38" und 52" derart geformt, dass die Austrittskante 10 nach der Fertigbearbeitung die endgültige Sollkontur aufweist. Somit werden nicht nur die Saug- und Druckflächen bearbeitet, sondern damit können auch die Kanten 10 und 12 zeitgleich bearbeitet werden.

Während der Bearbeitung werden die Elektroden 36" und 50" zur Schaufel 86 hin- und wegbewegt. Die Bewegungsfrequenz kann bis zu 50Hz betragen. Dabei berühren sich die erste vordere Kontaktfläche 44" und die zweite vorderen Kontaktfläche 55". Auch berühren sich die erste hintere Kontaktfläche 46" und die zweite hintere Kontaktfläche 58", wie dies in der Figur 4 abgebildet ist. Es ist anzumerken, dass hier keine Spülkanäle vorhanden sind. Die oszillierende Bewegung der Elektroden 36" und 48" übernimmt die Spülung.

Die Figur 5 zeigt die Fließrichtung des Elektrolyten. Die erste Elektrode 34" wird im oberen Bereich über der ersten Aufnahme 38" durch eine erste Einfüllfläche 39" verlängert. Die zweite Elektrode 50" wird im oberen Bereich über der zweiten Aufnahme 52" durch eine zweite Einfüllfläche 53" verlängert. Die beiden Einfüllflächen 39" und 53" bilden einen Einfüllkanal 90. Über diesen Einfüllkanal 90, der sich von der ersten Kante 10 bis zur zweiten Kante 12 erstreckt, wird Elektrolyt eingespeist, der dann auf der Höhe der Basis 20 im Ringraum 24 austritt. Damit wird die gesamte Schaufelspitze 18, die Seitenfläche 14 und 16 und die Kanten 10 und 12 mit Elektrolyt benetzt.

Es ist darauf hinzuweisen, dass das untere Ende 31" der ersten Elektrode 34" und das untere Ende 51" der zweiten Elektrode 50" derart geformt sind, dass die Ringraumkonturierung im selben Arbeitsschritt erfolgen kann. Somit fliest das Elektrolyt von Spitze 18 der Schaufel über die Seitenflächen 14 und 16 und/oder den Kanten 10 und 12 zur Basis 20 hin.

Die Fertigbearbeitung erfolgt vorzugsweise im Anschluss an die Kantenbearbeitung. Es ist allerdings hervorzuheben, dass die Fertigbearbeitung direkt auf das Rohteil 8 bzw. auf die Zwischenschaufel 32 angewendet werden kann.

Außerdem fliest der Elektrolyt, wie Figur 5 für die Endbearbeitung abgebildet, genauso für die Zwischen- und/oder Kantenbearbeitung.

### Bezugszeichenliste

- 1: Nominalkontur
- 2: Werkstück
- 4: erste Lücke
- 6: zweite Lücke
- 8: Rohteil
- 10: erste Kante
- 12: zweite Kante
- 14: erste Seitenfläche
- 16: zweite Seitenfläche
- 18: Spitze
- 20: Basis
- 22: Randbereich von 2
- 24: Ringraumoberfläche
- 30: Zwischenschaufel
- 31: unteres Ende von 34
- 32: fertigbearbeitete Zwischenschaufel
- 33": oberes Ende von 34"
- 34,34',34": erste Elektrode 1., 2., 3. Ausführungsform
- 35": hinteres Ende von 34"
- 36,36',36": erstes Element 1., 2., 3. Ausführungsform
- 37': Führungsfläche von 36'
- 38: erste Aufnahme
- 39": Einfüllfläche von 34"
- 40: erste vordere Aufnahmekante
- 42: erste hintere Aufnahmekante
- 44, 44': erste vordere Spülfläche 1., 2. Ausführungsform
- 44": erste vordere Kontaktfläche von 34"
- 46: erste hintere Spülfläche
- 46": erste hintere Kontaktfläche von 34"
- 47': Führungsfläche von 48'
- 48,48',48": zweites Element 1., 2., 3. Ausführungsform
- 49": vorderes Ende von 50"
- 50,50', 50": zweite Elektrode der 1., 2. , 3. Ausführungsform
- 51": unteres Ende von 50"
- 52: zweite Aufnahme
- 53: Einfüllfläche von 50
- 54: zweite vordere Aufnahmekante
- 55, 55': zweite vordere Spülfläche 1., 2. Ausführungsform von 50 bzw 50'
- 55": zweite vordere Kontaktfläche von 50"
- 56: zweite hintere Aufnahmekante
- 58: zweite hintere Spülfläche
- 58": zweite hintere Kontaktfläche
- 60: erster Spülkanal
- 62: zweiter Spülkanal
- 64: in Bearbeitung befindliche Kantenschaufel
- 66: fertigbearbeitete Kantenschaufel
- 68, 68': erster Isolator 1., 2. Ausführungsform
- 70: mittlerer Bereich
- 72: Haltebereich
- 74: Spülbereich

- 78, 78': zweiter Isolator 1. , 2. Ausführungsform
- 80: mittlerer Bereich
- 82: Haltebereich
- 84: Spülbereich
- 86: in Bearbeitung befindliche Endschaufel
- 88: fertige Endschaufel
- 90: Einfüllkanal

## Patentansprüche

1. Verfahren zur Herstellung eines Schaufelblattes aus einem Werkstück (2) umfassend mindestens zwei Lücken (4, 6) und mindestens ein zwischen den beiden Lücken (4, 6) angeordnetes Rohteil (8) des Werkstücks (2), wobei das Rohteil zwei sich gegenüberliegende Seitenflächen (14, 16) aufweist, die durch eine Basis (20), durch eine Spitze (18) und durch eine erste (10) und zweite (12) Kante begrenzt werden und wobei das Verfahren die folgende Schritte umfasst:
a) Anordnen einer ersten Elektrode (34, 34', 34") in die erste Lücke (4) und Anordnen einer zweiten Elektrode (50, 50', 50") in die zweite Lücke (6), wobei die Oberfläche des Werkstücks (2) an den Lücken (4, 6) eine Ringraumoberfläche (24) ausbildet;
b) Anlegen einer positiven Spannung an das Rohteil (8) und Anlegen einer negativen Spannung an die erste Elektrode (34, 34', 34") und an die zweite Elektrode (50, 50', 50"),
c) Bewegen der ersten Elektrode (34, 34', 34") in Richtung der ersten Seitenfläche (14) und/oder Bewegen der zweiten Elektrode (50, 50', 50") in Richtung der zweiten Seitenfläche (16), wobei
vor Schritt b) ein Schritt d) folgt, bei dem zwischen den beiden Elektroden (34, 34', 34"; 50, 50', 50") über die Spitze (18) zur Basis (20) hin Elektrolyt geleitet wird, **dadurch gekennzeichnet, dass**
mit den Schritten a) bis d) aus dem Rohteil (8) eine Zwischenschaufel (32) erzeugt wird, die im Wesentlichen ein gleichmäßiges Aufmaß an mindestens einem Bereich des Schaufelblattes gegenüber einer Nominalkontur (1) des Schaufelblattes aufweist, wobei der Bereich, der das gleichmäßige Aufmaß an mindestens einem Bereich des Schaufelblattes gegenüber einer Nominalkontur (1) des Schaufelblattes aufweist, die erste (10) und/oder die zweite (12) Kante des Schaufelblattes darstellt und wobei in einer Fertigbearbeitung mit den Schritten a) bis d) aus der Zwischenschaufel (32) eine fertige Endschaufel (88) erzeugt wird, die die Nominalkontur (1) des Schaufelblattes aufweist.

2. Verfahren nach Anspruch 1, **dadurch gekennzeichnet, dass** die beiden Lücken (4, 6) der Ringraumoberfläche (24) durch mechanisches und/oder durch elektrochemisches Abtragen hergestellt sind.

3. Verfahren nach mindestens einem der vorherigen Ansprüche, **dadurch gekennzeichnet, dass** mit den Schritten a) bis d) aus dem Zwischenteil die Nominalkontur (1) des Schaufelblattes und die Nominalkontur eines Ringraums (24) in der Nähe der Basis (20) erzeugt wird.

4. Verfahren nach Anspruch 1, **dadurch gekennzeichnet, dass** nach Schritt c) ein Schritt e) folgt, bei dem die erste Elektrode (34") von der ersten Seitenfläche (14) und/oder die zweite Elektrode (50") von der zweiten Seitenfläche (16) wegbewegt wird.

5. Verfahren nach Anspruch 4, wobei die Schritte c) und e) bis zu 30 mal, insbesondere bis zu 50 mal, in der Sekunde wiederholt werden.

## Claims

1. Method for producing an airfoil from a workpiece (2) comprising at least two gaps (4, 6) and at least one blank (8) of the workpiece (2) arranged between the two gaps (4, 6), the blank having two opposite side surfaces (14, 16) delimited by a base (20), by a tip (18) and by a first (10) and a second (12) edge, the method comprising the following steps:
a) arranging a first electrode (34, 34', 34") in the first gap (4) and arranging a second electrode (50, 50', 50") in the second gap (6), the surface of the workpiece (2) forming an annular space surface (24) at the gaps (4, 6);
b) applying a positive voltage to the blank (8) and applying a negative voltage to the first electrode (34, 34', 34") and to the second electrode (50, 50', 50"),
c) moving the first electrode (34, 34', 34") toward the first side surface (14) and/or moving the second electrode (50, 50', 50") toward the second side surface (16),
with step b) being preceded by step d), in which electrolyte is conducted between the two electrodes (34, 34', 34"; 50, 50', 50") via the tip (18) to the base (20), **characterized in that** with steps a) to d) an intermediate airfoil (32) is produced from the blank (8) and has a substantially uniform oversize at at least one region of the airfoil compared with a nominal contour (1) of the airfoil, the region having the uniform oversize at at least one region of the airfoil compared with a nominal contour (1) of the airfoil being the first (10) and/orthe second (12) edge of the airfoil and, in a finishing process with steps a) to d), a finished end airfoil (88) which has the nominal contour (1) of the airfoil being produced from the intermediate airfoil (32).

2. Method according to claim 1, **characterized in that** the two gaps (4, 6) of the annular space surface (24) are produced by mechanical and/or by electrochemical ablation.

3. Method according to at least one of the preceding claims, **characterized in that**, with steps a) to d), the nominal contour (1) of the airfoil and the nominal contour of an annular space (24) near the base (20) are generated from the intermediate part.

4. Method according to claim 1, **characterized in that** step c) is followed by step e), in which the first electrode (34") is moved away from the first side surface (14) and/or the second electrode (50") is moved away from the second side surface (16).

5. Method according to claim 4, wherein steps c) and e) are repeated up to 30 times, in particular up to 50 times, per second.

## Revendications

1. Procédé de fabrication d'une pale à partir d'une pièce (2) comprenant au moins deux espaces (4, 6) et au moins une ébauche (8) de la pièce (2) disposée entre les deux espaces (4, 6), l'ébauche comportant deux surfaces latérales (14, 16) opposées délimitées par une base (20), par une pointe (18) et par des premier (10) et second (12) bords, le procédé comprenant les étapes suivantes :
a) la disposition d'une première électrode (34, 34', 34") dans le premier espace (4) et la disposition d'une seconde électrode (50, 50', 50") dans le second espace (6), la surface de la pièce (2) formant une surface d'espace annulaire (24) au niveau des espaces (4, 6) ;
b) l'application d'une tension positive à l'ébauche (8) et l'application d'une tension négative à la première électrode (34, 34', 34") et à la seconde électrode (50, 50', 50"),
c) le déplacement de la première électrode (34, 34', 34") dans la direction de la première surface latérale (14) et/ou le déplacement de la seconde électrode (50, 50', 50") dans la direction de la seconde surface latérale (16),
une étape d) précédant l'étape b), étape d) dans laquelle l'électrolyte est conduit entre les deux électrodes (34, 34', 34" ; 50, 50', 50") par l'intermédiaire de la pointe (18) vers la base (20), **caractérisé en ce que**
grâce aux étapes a) à d), une pale intermédiaire (32) est fabriquée à partir de l'ébauche (8), laquelle pale intermédiaire comporte, au niveau d'au moins une zone de la pale, une tolérance sensiblement uniforme par rapport à un contour nominal (1) de la pale, la zone comportant la tolérance uniforme au niveau d'au moins une zone de la pale par rapport à un contour nominal (1) de la pale représentant le premier (10) et/ou le second (12) bord de la pale, et, dans une opération de finition grâce aux étapes a) à d), une pale d'extrémité finie (88) étant produite à partir de la pale intermédiaire (32), laquelle pale d'extrémité comporte le contour nominal (1) de la pale.

2. Procédé selon la revendication 1, **caractérisé en ce que** les deuxespaces (4, 6) de la surface d'espace annulaire (24) sont produits par ablation mécanique et/ou électrochimique.

3. Procédé selon au moins l'une des revendications précédentes, **caractérisé en ce que**, grâce aux étapes a) à d), le contour nominal (1) de la pale et le contour nominal d'un espace annulaire (24) au voisinage de la base (20) sont produits à partir de la pièce intermédiaire.

4. Procédé selon la revendication 1, **caractérisé en ce que** l'étape c) est suivie d'une étape e) dans laquelle la première électrode (34") est éloignée de la première surface latérale (14) et/ou la seconde électrode (50") est éloignée de la seconde surface latérale (16).

5. Procédé selon la revendication 4, dans lequel les étapes c) et e) sont répétées jusqu'à 30 fois, en particulier jusqu'à 50 fois, par seconde.
